Europäisches Patentamt

European Patent Office

Office européen des brevets

(11) Veröffentlichungsnummer: **0 314 957**

**A1**

(12) **EUROPÄISCHE PATENTANMELDUNG**

(21) Anmeldenummer: **88117042.7**

(22) Anmeldetag: **13.10.88**

(51) Int. Cl.⁴: **G01P 1/02 , G01P 3/487**

(30) Priorität: **23.10.87 DE 8714182 U**

(43) Veröffentlichungstag der Anmeldung:
**10.05.89 Patentblatt 89/19**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Güntner, Herwig, Dr.**
**Wilhelm-Albrecht-Strasse 161**
**D-8540 Schwabach(DE)**

(54) **Digitaler Drehzahlgeber.**

(57) Einem magnetbestückten rotierenden Geberrad (3) ist ein Impulsdrahtsensoren enthaltende ruhende Sensorkassette (4) zugeordnet, die elektrisch und mechanisch mit einer steifen Leiterplatte (6) fest verbunden ist und diese Einheit zur Einstellung des Luftspaltes (7) zwischen Geberrad und Sensorkassette durch einen einbringbaren Einstellbügel (9) justierbar an der ebenen Frontfläche (2A)eines Oberteiles (2) gehalten ist, wobei das Oberteil zusammen mit einem an einem Maschinengehäuse befestigten Unterteil (1) ein das Geberrad und die Sensorkassette umgebendes Gehäuse bilden.

## Digitaler Drehzahlgeber

Die Erfindung betrifft einen digitalen Drehzahlgeber nach dem Oberbegriff des Anspruches 1.

Bei solchen Drehzahlgebern mit Impulsdrahtsensoren ist eine genaue Justierung des Luftspaltes zwischen den Setz- und Rücksetzmagneten am Umfang des Geberrades und den ruhend angeordneten Sensoren erforderlich, wozu die Verwendung mehrerer in Umfangsrichtung des Geberrades gesehen hintereinander angeordneter Sensoren diese in einer einen Teil des Geberrades überdeckenden Sensorkasette untergebracht sind.

Der Erfindung liegt die Aufgabe zugrunde, einen einfachen, betriebssicheren robusten und justierbaren Drehzahlgeber der genannten Art zu schaffen.

Die Lösung der gestellten Aufgabe gelingt durch die kennzeichnenden Merkmale des Anspruches 1. Der Drehzahlgeber besteht aus wenigen Teilen und ist an der Maschine auf einfache Weise justierbar.

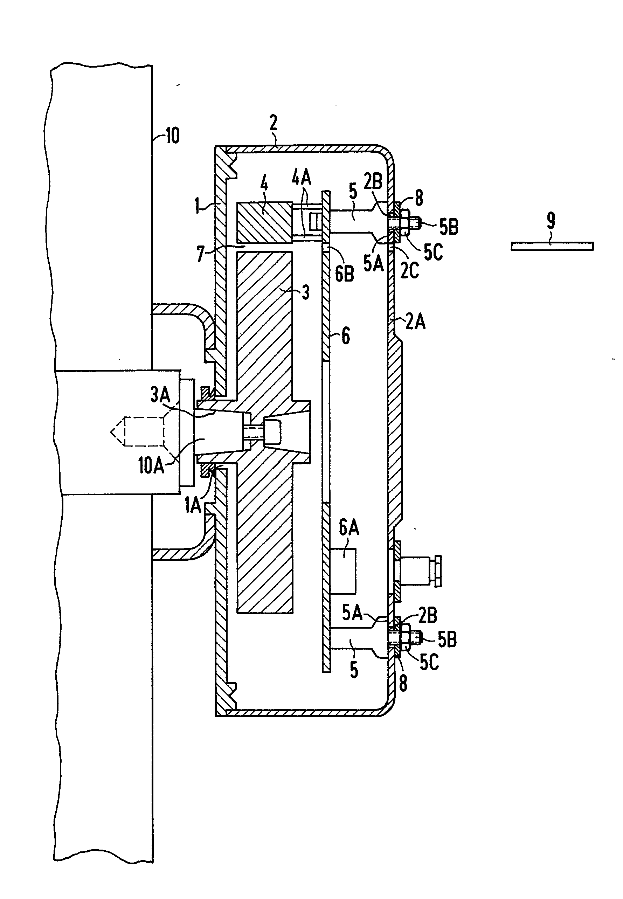

Ein Ausführungsbeispiel eines Drehzahlgebers nach der Erfindung ist anhand der Zeichnung näher erläutert.

Der mit einer Maschinenwelle gekoppelte und am Maschinengehäuse lösbar befestigte Drehzahlgeber weist ein zweiteiliges Gehäuse aus einem an das Maschinengehäuse 10 angepaßten Unterteil 1 und einen mit diesem verbundenen haubenförmigen Oberteil 2 auf, in dem ein umfangsseitig mit Setz - und Rücksetzmagneten bestückten Geberrad 3 untergebracht ist, das mit dem durch einen Wellendurchlaß 1A im Unterteil 1 ragenden Wellenende 10A lösbar verbunden ist. Den Umfang des Geberrades 3 gegenüber ist durch einen Luftspalt 7 getrennt eine Sensorkassette 4 ruhend im Gehäuse angeordnet, die eine oder mehrere Impulsdrahtsensoren enthält, die elektrisch mit einer am Oberteil 2 verstellbar gehaltenen steifen Leiterplatte 6 verbunden sind, wobei die Sensorkassette 4 als Einheit an der Leiterplatte 6 durch steife Befestigungsmittel 4A gehalten ist.

Die Leiterbahnen der Leiterplatte 6 sind mit Verbindungsklemmen 6A verbunden, die ihrerseits an von außen zugängliche Leitungsanschlüsse 2D am Oberteil 2 geführt sind. Die Sensorkassette 4 überdeckt, abhängig von der Anzahl der Impulsdrahtsensoren, einen entsprechenden Abschnitt des Umfanges des Geberrades 3 und ist an die Krümmung des Geberradumfangs angepaßt, so daß im justierten Zustand der Sensorkassette 4 der Luftspalt 7 über seine ganze Erstreckung gleich groß ist.

Zum Einjustieren des Luftspaltes 7 muß die Leiterplatte 6 mitsamt der Sensorkassette 4 in einer senkrecht zur Wellenlängsachse gerichteten Ebene nach allen Richtungen verstellbar an der zu dieser Ebene parallel ausgerichteten ebenen Frontfläche 2A des Oberteils 2 arretierbar gehalten sein.

Hierzu sind an der Leiterplatte 6 senkrecht zu dieser erstreckt mehrere gleichlange Abstandsbolzen 5 befestigt, die stirnseitige Anlageflächen 5A aufweisen, aus denen mittig stiftförmige Endteile mit Schraubgewinde 5B vorragen, die einen relativ kleinen Querschnitt im Vergleich zu den Anlageflächen 5A aufweisen und durch Verbindungsdurchlässe 2B in der ebenen Frontfläche 2A des Oberteils 2 ragen, so daß von außen aufgesetzte, die kleineren Verbindungsdurchlässe überdeckende Klemmscheiben 8 durch Befestigungsmuttern 5C gegen die Außenseite der Frontfläche 2A des Oberteils 2 gedrückt werden und dabei über die stirnseitigen Anlageflächen 5A eine Klemmhalterung der Leiterplatte 6 samt Sensorkassette 4 am Oberteil 2 erreicht wird. Die Verbindungsdurchlässe 2B haben einen kleineren Durchmesser als die Anlageflächen 5A sowie die Klemmscheiben 8 aber einen zum Justieren notwendig größeren Durchmesser als die stiftförmigen Endteile 5B.

Die Justierung erfolgt bei gelockerten Befestigungsmuttern 5C durch einen von außen in den Luftspalt 7 einschiebbaren Einstellbügel 9, wozu im Abstand der beiden parallelen Schenkel des Einstellbügels deren Dicke den Luftspalt bestimmt, in der Frontfläche 2A im Luftspaltbereich zwei Justierlöcher 2C und in der Leiterplatte 6 zwei zugeordnete Justierlöcher 6B vorgesehen sind. Bei eingefügtem Einstellbügel nach vorheriger Verstellung der gelösten Leiterplatte wird diese durch die Befestigungsmuttern 5C in der richtigen Lage am Oberteil festgeklemmt, so daß nach Entfernen des Einstellbügels 9 der am Maschinengehäuse befestigte Drehzahlgeber betriebsbereit ist.

Die Klemmscheiben 8 können in Vertiefungen auf der Außenseite der Frontfläche versenkt angebracht sein, wobei die Vertiefungen größer als die Klemmschrauben bemessen sein müssen, damit die Justierverstellungen nicht behindert werden.

## Ansprüche

1. Digitaler Drehzahlgeber mit magnetbestücktem Geberrad für ruhend angeordnete Impulsdrahtsensoren, die durch einen umfangsseitigen Luftspalt von dem mit einer Maschinenwelle gekuppelten Geberrad getrennt sind,
**dadurch gekennzeichnet,**
daß ein oder mehrere Impulsdrahtsensoren in einer über einen Teil des Geberradumfangs erstreckten Sensorkassette (4) untergebracht und diese elektrisch und mechanisch mit einer steifen Leiterplatte (6) zu einer Einheit verbunden ist, die ihrerseits in der Leiterplattenebene justierbar an einer ebenen Frontfläche (2A) eines Oberteils (2) angeordnet ist, das zusammen mit einem am Maschinengehäuse befestigten Unterteil (1) ein das mit dem Wellenende (10A) gekuppelte Geberrad (3) sowie die Einheit aus Leiterplatte (6) und Sensorkassette (4) umgebende Gehäuse bildet und in der Frontfläche (2A) sowie der Leiterplatte (6) jeweils zwei Justierlöcher (2C,6B) in Höhe des Luftspaltes (7) für die in den Luftspalt einbringbaren und diesen festlegenden Schenkel eines Einstellbügels (9) vorgesehen sind, der nach Arretierung der Leiterplatte (6) am Oberteil (2) und Festlegen des Luftspaltes (7) aus diesen wieder entfernbar ist.

2. Drehzahlgeber nach Anspruch 1,
**dadurch gekennzeichnet,**
daß die Leiterplatte (6) mehrere gleichlange Abstandsbolzen (5) mit stirnseitigen Anlageflächen (5A) trägt, und aus den Anlageflächen dünnere Endteile mit Schraubgewinde (5B) vorstehen, die durch größere Verbindungsdurchlässe (2B) in der Frontfläche (2A) des Oberteils (2) gesteckt und von außen durch Klemmscheiben (8) umgeben sind, die durch Befestigungsmuttern (5C) gegen die Außenseite der Frontfläche (2A) verstellbar sind, so daß die Einheit (4,6) betriebsmäßig am Gehäuse festgeklemmt ist.

3. Drehzahlgeber nach Anspruch 1 und 2,
**dadurch gekennzeichnet,**
daß die Klemmscheiben (8) von außenseitigen Vertiefungen der Frontfläche (2A) umgeben sind.

87 P 3406    E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 478 897 (TELDIX) <br> * Seite 5, Zeilen 1-25; Figuren 1,2 * <br> --- | 1 | G 01 P 1/02 <br> G 01 P 3/487 |
| A | US-A-3 742 243 (GAMBLE) <br> * Spalte 3, Zeilen 57-65; Figur 5 * <br> --- | 1 | |
| A | FR-A-2 010 099 (MATSUSHITA) <br> * Seite 5, Zeilen 24-40; Figuren 4,5,11,12 * <br> --- | 1,2 | |
| A | EP-A-0 194 932 (PRECISION MECANIQUE) <br> * Seite 5, Zeilen 29-33; Figuren 1,2 * <br> --- | 1 | |
| A | DE-A-2 940 610 (BOSCH) <br> * Seite 7, Zeile 11 - Seite 8, Zeile 9; <br> Seite 9, Zeile 29 - Seite 10, Zeile 12; <br> Figuren 1,5 * <br> --- | 1 | |
| A | GB-A-2 009 939 (QUICK-ROTAN BECKER) <br> * Seite 2, Zeilen 70-77; Figur 3 * <br> ----- | 2 | RECHERCHIERTE SACHGEBIETE (Int. Cl.4) <br><br> G 01 P <br> G 01 D |

Der vorliegende Recherchenbericht wurde für alle Patentansprüche erstellt

| Recherchenort | Abschlußdatum der Recherche | Prüfer |
|---|---|---|
| DEN HAAG | 21-02-1989 | HANSEN P. |